# EUROPEAN PATENT APPLICATION

(11) **EP 4 746 311 A1**
(43) Date of publication of application: **20.05.2026**
(21) Application number: 23951075.3
(22) Date of filing: 04.09.2023
(51) Int. Cl.: H04B 7/185

(54) **COMMUNICATION METHOD AND COMMUNICATION APPARATUS**

(71) Applicant: Huawei Technologies Co., Ltd., Shenzhen, Guangdong 518129 (CN)
(72) Inventor: LI, Kexin, Shenzhen, Guangdong 518129 (CN); KONG, Chuili, Shenzhen, Guangdong 518129 (CN); WANG, Yu, Shenzhen, Guangdong 518129 (CN); WANG, Jun, Shenzhen, Guangdong 518129 (CN)
(74) Representative: Pfenning, Meinig & Partner mbB
(86) International application number: PCT/CN2023/116747
(87) International publication number: WO 2025/050244

(57) **Abstract**

This application provides a communication method and a communication apparatus. In the method, a first satellite obtains a first SSB proper subset of a first beam position, where the first SSB proper subset is a proper subset of an SSB burst set of the first satellite, the first SSB proper subset is determined based on related information of the first satellite and a second satellite serving the first beam position, and the first beam position is a geographic area jointly covered by the first satellite and the second satellite; and the first satellite sends a first SSB to the first beam position, where the first SSB is an SSB that is in the first SSB proper subset and that is allocated by the first satellite to the first beam position. The method can reduce a probability of SSB collision when different satellites jointly serve a same beam position.

## Description

### TECHNICAL FIELD

This application relates to the field of wireless communication, and specifically, to a communication method and a communication apparatus.

### BACKGROUND

When a beam position #1 is simultaneously served by a satellite 1 and a satellite 2, both the satellite 1 and the satellite 2 need to send a synchronization signal block (synchronization signal block, SSB) to the beam position #1, where the beam position #1 is a geographic area jointly covered by the satellite 1 and the satellite 2. In a possible scenario, the beam position #1 is simultaneously served by the satellite 1 and the satellite 2. For example, the beam position #1 is originally served by the satellite 2, the satellite 2 periodically sends an SSBi to the beam position #1, where the SSBi is an SSB in an SSB burst set of the satellite 2; however, as the satellite 2 moves, switching from the satellite 2 to the satellite 1 is needed for the beam position #1. In this scenario, a terminal in the beam position #1 needs to separately receive and measure SSBs sent by the satellite 1 and the satellite 2 to the beam position #1. In this case, a collision may occur between the SSBs sent by the satellite 1 and the satellite 2 to the beam position #1, leading to interference when the terminal in the beam position #1 receives the SSB.

### SUMMARY

This application provides a communication method and a communication apparatus, to reduce a probability of SSB collision when different satellites jointly serve a same beam position.

According to a first aspect, a communication method is provided. The method may be performed by a first satellite, or may be performed by a component (for example, a chip or a circuit) of the first satellite. This is not limited herein. For ease of description, the following uses an example in which the method is performed by the first satellite for description.

The method may include: The first satellite obtains a first SSB proper subset of a first beam position, where the first SSB proper subset is a proper subset of an SSB burst set of the first satellite, the first SSB proper subset is determined based on related information of the first satellite and a second satellite serving the first beam position, and the first beam position is a geographic area jointly covered by the first satellite and the second satellite; and the first satellite sends a first SSB to the first beam position, where the first SSB is an SSB that is in the first SSB proper subset and that is allocated by the first satellite to the first beam position.

It may be understood that the first SSB proper subset is a candidate set of SSBs allocated by the first satellite to the first beam position.

In the foregoing technical solution, the related information of the first satellite and the second satellite that jointly serve the beam position #1 may be comprehensively considered. Some or all SSBs that collide with an SSB sent by the second satellite to the first beam position are excluded from the SSB burst set of the first satellite, to determine the first SSB proper subset. In this case, the first satellite allocates an SSB to the first beam position based on the first SSB proper subset, to reduce a probability of SSB collision when the first satellite and the second satellite jointly serve the first beam position.

In some implementations of the first aspect, that the first satellite obtains the first SSB proper subset of the first beam position includes: The first satellite determines the first SSB proper subset based on a second SSB, where the second SSB is an SSB allocated by the second satellite to the first beam position.

In some implementations of the first aspect, that the first satellite determines the first SSB proper subset based on the second SSB includes: The first satellite determines the first SSB proper subset based on a maximum propagation delay difference, a minimum propagation delay difference, and the second SSB. The maximum propagation delay difference is determined based on first propagation duration and second propagation duration, and the minimum propagation delay difference is determined based on third propagation duration and fourth propagation duration. The first propagation duration is determined based on maximum propagation duration from the first satellite to the first beam position and first delay pre-compensation duration. The second propagation duration is determined based on minimum propagation duration from the second satellite to the first beam position and second delay pre-compensation duration. The third propagation duration is determined based on minimum propagation duration from the first satellite to the first beam position and the first delay pre-compensation duration. The fourth propagation duration is determined based on maximum propagation duration from the second satellite to the first beam position and the second delay pre-compensation duration. The first delay compensation duration and the second delay compensation duration are respectively delay compensation duration allocated by the first satellite to the first beam position and delay compensation duration allocated by the second satellite to the first beam position. Delay pre-compensation duration of all beam positions within coverage of the first satellite allows devices located at center points of all the beam positions within the coverage of the first satellite to receive, at a same moment, a signal that needs to be sent at a first moment before the delay pre-compensation duration is allocated. Delay pre-compensation duration of all beam positions within coverage of the second satellite allows devices located at center points of all the beam positions within the coverage of the second satellite to receive, at a same moment, a signal that needs to be sent at a second moment before the pre-compensation duration is allocated.

In the foregoing technical solution, an implementation of determining the first SSB proper subset based on specific information of the first satellite and the second satellite serving the first beam position is provided.

In some implementations of the first aspect, that the first satellite determines the first SSB proper subset based on the maximum propagation delay difference, the minimum propagation delay difference, and the second SSB includes: The first satellite determines a third SSB based on the maximum propagation delay difference, where the third SSB is included in the SSB burst set of the first satellite; the first satellite determines a fourth SSB based on the minimum propagation delay difference, where the fourth SSB is included in the SSB burst set of the first satellite; or the first satellite determines the first SSB proper subset, where the first SSB proper subset includes a remaining SSB in the SSB burst set of the first satellite other than the third SSB, the fourth SSB, and all SSBs between the third SSB and the fourth SSB.

In the foregoing technical solution, a specific implementation in which the first satellite determines the first SSB proper subset based on the maximum propagation delay difference, the minimum propagation delay difference, and the second SSB is provided. The first satellite allocates an SSB to the first beam position by using the first SSB proper subset determined based on the method, so that an SSB collision can be effectively avoided when the first satellite and the second satellite jointly serve the first beam position.

In some implementations of the first aspect, the method further includes: The first satellite receives first information from the second satellite, where the first information is used to determine the first SSB proper subset.

In some implementations of the first aspect, the first information includes the second delay pre-compensation duration, location information of the second satellite, and index information of the second SSB in an SSB burst set of the second satellite.

In some implementations of the first aspect, the first information includes the second delay pre-compensation duration, the minimum propagation duration from the second satellite to the first beam position, the maximum propagation duration from the second satellite to the first beam position, and index information of the second SSB in an SSB burst set of the second satellite.

In some implementations of the first aspect, the first information includes the second delay pre-compensation duration, a quantity of offset orthogonal frequency division multiplexing OFDM symbols corresponding to the minimum propagation duration from the second satellite to the first beam position, a quantity of offset OFDM symbols corresponding to the maximum propagation duration from the second satellite to the first beam position, and index information of the second SSB in an SSB burst set of the second satellite.

According to a second aspect, a communication method is provided. The method may be performed by a second satellite, or may be performed by a component (for example, a chip or a circuit) of the second satellite. This is not limited herein. For ease of description, the following uses an example in which the method is performed by the second satellite for description.

The method may include: The second satellite generates first information, where the first information includes related information of the second satellite serving a first beam position, the first information is used to determine a first SSB proper subset, the first SSB proper subset is a candidate set of SSBs allocated by a first satellite to the first beam position, the first SSB proper subset is a proper subset of an SSB burst set of the first satellite, and the first beam position is a geographic area jointly covered by the first satellite and the second satellite; and the second satellite sends the first information to the first satellite.

For beneficial effects of the second aspect, refer to the descriptions of the first aspect. Details are not described herein again.

In some implementations of the second aspect, the first SSB proper subset is determined based on a maximum propagation delay difference, a minimum propagation delay difference, and a second SSB, the second SSB is an SSB allocated by the second satellite to the first beam position, and the first information is used to determine the maximum propagation delay difference, the minimum propagation delay difference, and the second SSB. The maximum propagation delay difference is determined based on first propagation duration and second propagation duration, and the minimum propagation delay difference is determined based on third propagation duration and fourth propagation duration. The first propagation duration is determined based on maximum propagation duration from the first satellite to the first beam position and first delay pre-compensation duration. The second propagation duration is determined based on minimum propagation duration from the second satellite to the first beam position and second delay pre-compensation duration. The third propagation duration is determined based on minimum propagation duration from the first satellite to the first beam position and the first delay pre-compensation duration. The fourth propagation duration is determined based on maximum propagation duration from the second satellite to the first beam position and the second delay pre-compensation duration. The first delay compensation duration and the second delay compensation duration are respectively delay compensation duration allocated by the first satellite to the first beam position and delay compensation duration allocated by the second satellite to the first beam position. Delay pre-compensation duration of all beam positions within coverage of the first satellite allows devices located at center points of all the beam positions within the coverage of the first satellite to receive, at a same moment, a signal that needs to be sent at a first moment before the delay pre-compensation duration is allocated. Delay pre-compensation duration of all beam positions within coverage of the second satellite allows devices located at center points of all the beam positions within the coverage of the second satellite to receive, at a same moment, a signal that needs to be sent at a second moment before the pre-compensation duration is allocated.

In some implementations of the second aspect, the first information includes the second delay pre-compensation duration, location information of the second satellite, and index information of the second SSB in an SSB burst set of the second satellite.

In some implementations of the second aspect, the first information includes the second delay pre-compensation duration, the minimum propagation duration from the second satellite to the first beam position, the maximum propagation duration from the second satellite to the first beam position, and index information of the second SSB in an SSB burst set of the second satellite.

In some implementations of the second aspect, the first information includes the second delay pre-compensation duration, a quantity of offset orthogonal frequency division multiplexing OFDM symbols corresponding to the minimum propagation duration from the second satellite to the first beam position, a quantity of offset OFDM symbols corresponding to the maximum propagation duration from the second satellite to the first beam position, and index information of the second SSB in an SSB burst set of the second satellite.

According to a third aspect, a communication apparatus is provided. The apparatus is configured to perform the method provided in the first aspect. Specifically, the apparatus may include a unit and/or a module, for example, a processing unit and/or a communication unit, configured to perform the method in any one of the first aspect or the possible implementations of the first aspect.

In an implementation, the apparatus is a first satellite. When the apparatus is the first satellite, the communication unit may be a transceiver or an input/output interface, and the processing unit may be at least one processor. Optionally, the transceiver may be a transceiver circuit. Optionally, the input/output interface may be an input/output circuit.

In another implementation, the apparatus is a chip, a chip system, or a circuit used in the first satellite. When the apparatus is the chip, the chip system, or the circuit used in the first satellite, the communication unit may be an input/output interface, an interface circuit, an output circuit, an input circuit, a pin, a related circuit, or the like on the chip, the chip system, or the circuit, and the processing unit may be at least one processor, a processing circuit, a logic circuit, or the like.

According to a fourth aspect, a communication apparatus is provided. The apparatus is configured to perform the method provided in the second aspect. Specifically, the apparatus may include a unit and/or a module, for example, a processing unit and/or a communication unit, configured to perform the method in any one of the second aspect or the possible implementations of the second aspect.

In an implementation, the apparatus is a second satellite. When the apparatus is the second satellite, the communication unit may be a transceiver or an input/output interface, and the processing unit may be at least one processor. Optionally, the transceiver may be a transceiver circuit. Optionally, the input/output interface may be an input/output circuit.

In another implementation, the apparatus is a chip, a chip system, or a circuit used in the second satellite. When the apparatus is the chip, the chip system, or the circuit used in the first satellite, the communication unit may be an input/output interface, an interface circuit, an output circuit, an input circuit, a pin, a related circuit, or the like on the chip, the chip system, or the circuit, and the processing unit may be at least one processor, a processing circuit, a logic circuit, or the like.

According to a fifth aspect, a communication apparatus is provided. The apparatus includes: at least one processor, where the at least one processor is coupled to at least one memory, the at least one memory is configured to store a computer program or instructions, and the at least one processor is configured to invoke the computer program or the instructions from the at least one memory and run the computer program or the instructions, to enable the communication apparatus to perform the method in any one of the first aspect or the possible implementations of the first aspect.

In an implementation, the apparatus is a first satellite.

In another implementation, the apparatus is a chip, a chip system, or a circuit used in the first satellite.

According to a sixth aspect, a communication apparatus is provided. The apparatus includes: at least one processor, where the at least one processor is coupled to at least one memory, the at least one memory is configured to store a computer program or instructions, and the at least one processor is configured to invoke the computer program or the instructions from the at least one memory and run the computer program or the instructions, to enable the communication apparatus to perform the method in any one of the second aspect or the possible implementations of the second aspect.

In an implementation, the apparatus is a second satellite.

In another implementation, the apparatus is a chip, a chip system, or a circuit used in the second satellite.

According to a seventh aspect, a processor is provided, configured to perform the methods provided in the foregoing aspects.

Operations such as sending and obtaining/receiving related to the processor may be understood as operations such as output and receiving or input of the processor, or operations such as sending and receiving performed by a radio frequency circuit and an antenna, unless otherwise specified, or provided that the operations do not contradict actual functions or internal logic of the operations in related descriptions. This is not limited in this application.

According to an eighth aspect, a computer-readable storage medium is provided. The computer-readable storage medium stores program code executed by a device, and the program code is used to perform the method according to any one of the first aspect or the possible implementations of the first aspect or the method according to any one of the second aspect or the possible implementations of the second aspect.

According to a ninth aspect, a computer program product including instructions is provided. When the computer program product is run on a computer, the computer is enabled to perform the method according to any one of the first aspect or the possible implementations of the first aspect or the method according to any one of the second aspect or the possible implementations of the second aspect.

According to a tenth aspect, a chip is provided. The chip includes a processor and a communication interface, and the processor reads, through the communication interface, instructions stored in a memory, to perform the method according to any one of the first aspect or the possible implementations of the first aspect or the method according to any one of the second aspect or the possible implementations of the second aspect.

Optionally, in an implementation, the chip further includes the memory. The memory stores a computer program or instructions. The processor is configured to execute the computer program or the instructions stored in the memory. When the computer program or the instructions are executed, the processor is configured to perform the method according to any one of the first aspect or the possible implementations of the first aspect or the method according to any one of the second aspect or the possible implementations of the second aspect.

According to an eleventh aspect, a communication system is provided. The communication system includes the communication apparatus shown in the fifth aspect and the communication apparatus shown in the sixth aspect.

### BRIEF DESCRIPTION OF DRAWINGS

FIG. 1 is a diagram of a satellite communication system applicable to an embodiment of this application;
FIG. 2 is a diagram of a time-frequency structure of an SSB;
FIG. 3 is a diagram of a process in which a base station sends an SSB in an NR system;
FIG. 4 is a diagram of a beam position and an allocated SSB in a satellite communication system;
FIG. 5 is a diagram of sending and receiving a signal at a beam position in satellite coverage before and after delay pre-compensation;
FIG. 6 is a diagram of switching from a satellite 2 to a satellite 1 for a beam position;
FIG. 7 is a diagram in which SSBs sent by a satellite 1 and a satellite 2 collide at a beam position #1;
FIG. 8 is a schematic flowchart of a communication method according to this application;
FIG. 9 is a diagram of propagation duration from a first satellite and a second satellite to a beam position #1;
FIG. 10 is a diagram of a collision between an SSB sent by a first satellite and an SSB sent by a second satellite that are received at a beam position #1 of a maximum propagation delay difference and a minimum propagation delay difference;
FIG. 11 is a block diagram of a communication apparatus 200 according to an embodiment of this application; and
FIG. 12 is a block diagram of a communication apparatus 300 according to an embodiment of this application.

### DESCRIPTION OF EMBODIMENTS

The following describes the technical solutions of this application with reference to the accompanying drawings.

The technical solutions of this application may be applied to a non-terrestrial network (non-terrestrial network, NTN) system such as a satellite communication system or a high altitude platform station (high altitude platform station, HAPS) communication system.

The satellite communication system can be integrated with a conventional mobile communication system. For example, the mobile communication system may be a 4th generation (4th generation, 4G) communication system (for example, a long term evolution (long term evolution, LTE) system), a worldwide interoperability for microwave access (worldwide interoperability for microwave access, WiMAX) communication system, a 5th generation (5th Generation, 5G) communication system (for example, a new radio (new radio, NR) system), and a future mobile communication system.

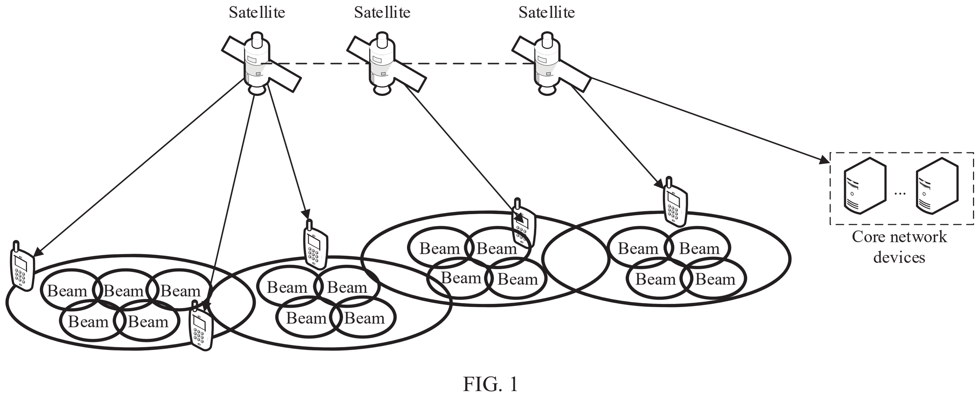

FIG. 1 is a diagram of a satellite communication system applicable to an embodiment of this application. As shown in FIG. 1, a satellite provides a communication service for a terminal device through a plurality of beams, and the satellite is connected to a core network device. The satellite uses the plurality of beams to cover a service area, and different beams may be used to perform communication in one or more manners of time division, frequency division, and spatial division. The satellite provides communication and navigation services for the terminal device by broadcasting a communication signal and a navigation signal. The satellite operates in a transparent (transparent) mode, has a relay forwarding function, and receives and forwards data from a base station as a relay device. When the satellite operates in a regenerative (regenerative) mode, the satellite has a data processing capability, and functions of the base station or some functions of the base station, and the satellite may be considered as the base station. Therefore, the satellite mentioned in this embodiment of this application may alternatively be a satellite base station or a network side device mounted on a satellite.

The terminal device mentioned in this embodiment of this application includes various handheld devices, vehicle-mounted devices, wearable devices, or compute devices that have a wireless communication function, or other processing devices connected to a wireless modem, and may be specifically user equipment (user equipment, UE), an access terminal, a subscriber unit, a subscriber station, a mobile station, a mobile console, a remote station, a remote terminal, a mobile device, a user terminal, a terminal, a wireless communication device, a user agent, or a user apparatus. The terminal device may alternatively be a satellite phone, a cellular phone, a smartphone, a wireless data card, a wireless modem, a machine-type communication device, a cordless phone, a session initiation protocol (session initiation protocol, SIP) phone, a wireless local loop (wireless local loop, WLL) station, a personal digital assistant (personal digital assistant, PDA), a handheld device or a compute device having a wireless communication function or another processing device connected to a wireless modem, a vehicle-mounted device or a wearable device, a virtual reality (virtual reality, VR) terminal device, an augmented reality (augmented reality, AR) terminal device, a wireless terminal in industrial control (industrial control), a wireless terminal in self-driving (self-driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), a terminal device in a 5G network or a future communication network, or the like.

It should be understood that the UE may be various mobile terminals, for example, a mobile satellite phone or a high-altitude aircraft, or may be various fixed terminals, for example, a communication terrestrial station.

The terminal may be a wireless terminal or a wired terminal. A wireless terminal may refer to a device that provides a user with voice and/or data connectivity, a handheld device with a wireless connection function, or another processing device connected to a wireless modem. The wireless terminal may communicate with one or more core networks through a radio access network (radio access network, RAN). The wireless terminal may be a mobile terminal, for example, a mobile phone (or referred to as a "cellular" phone), and a computer having a mobile terminal. For example, the wireless terminal may be a portable, pocket-sized, handheld, computer-built-in or vehicle-mounted mobile apparatus, which exchanges languages and/or data with the radio access network. For example, the terminal device may be a device such as a personal communication service (personal communication service, PCS) phone, a cordless telephone, a session initiation protocol (session initiation protocol, SIP) phone, a wireless local loop (wireless local loop, WLL) station, or a personal digital assistant (personal digital assistant, PDA). The wireless terminal may also be referred to as a system, a subscriber unit (subscriber unit, SU), a subscriber station (subscriber station, SS), a mobile station (mobile station, MB), a mobile (Mobile) console, a remote station (remote station, RS), an access point (access point, AP), a remote terminal (remote terminal, RT), an access terminal (access terminal, AT), a user terminal (user terminal, UT), a user agent (user agent, UA), a terminal device (user device, UD). A terminal device represented by a satellite phone or an in-vehicle satellite system may directly communicate with a satellite. A fixed terminal represented by a terrestrial communication station can communicate with a satellite only after being relayed by a terrestrial station. A wireless transceiver antenna is installed on the terminal device to set and obtain a communication status, to complete communication.

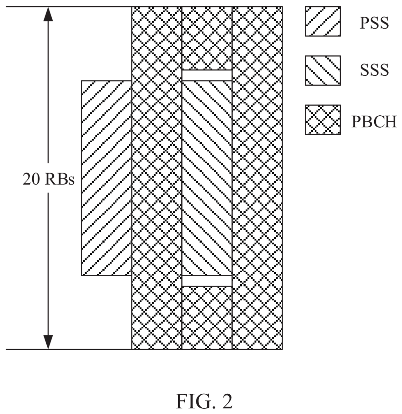

FIG. 2 is a diagram of a time-frequency structure of an SSB. In an NR system, a base station periodically sends a synchronization signal SSB, and a UE obtains downlink synchronization with the base station by receiving the SSB from the base station, and obtains a system message. The SSB includes a primary synchronization signal (primary synchronization signal, PSS), a secondary synchronization signal (secondary synchronization signal, SSS), and a physical broadcast channel (physical broadcast channel, PBCH). As shown in FIG. 2, one SSB occupies four orthogonal frequency division multiplexing (orthogonal frequency division multiplexing, OFDM) symbols in total in time domain, and occupies 240 subcarriers (that is, 20 resource blocks (resource blocks, RBs)) in total in frequency domain. The PSS occupies one symbol, the SSS occupies one symbol, the PBCH occupies three symbols, and one of the three symbols is shared with the SSS.

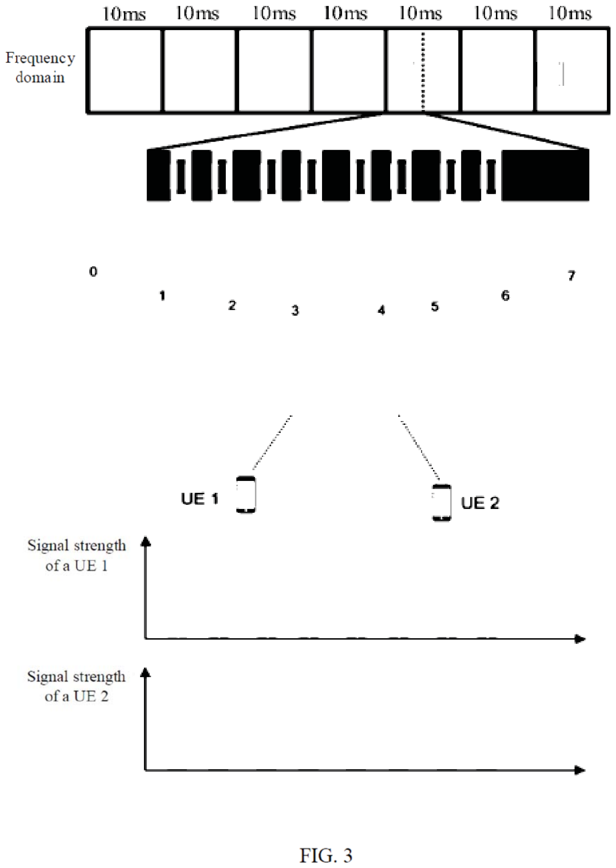

FIG. 3 is a diagram of a process in which a base station sends an SSB in an NR system. As shown in FIG. 3, in the NR system, a time resource is divided into one frame every 10 ms. For example, the base station sends an SSB burst set at an interval of 20 ms. The SSB burst set includes eight SSBs, which are denoted as {SSB0, SSB1, ..., SSB7}. Usually, the SSB set needs to be sent within a first half of each frame, that is, within 5 ms. The base station sends SSBO to SSB7 at different times within 5 ms. For example, when a subcarrier spacing (subcarrier spacing, SCS) is 15 kHz, 70 OFDM symbols are included in 5 ms, and a start OFDM symbol occupied for sending the SSBO to the SSB7 is {2,8,16,22,30,36,44,50}. In addition, the base station sends the SSBO to the SSB7 with different beamforming weights, that is, sending directions of the SSBO to the SSB7 are different, to form full coverage of a cell. The UE detects signal strength from the SSBO to the SSB7, and selects an SSB with a strongest signal for communication.

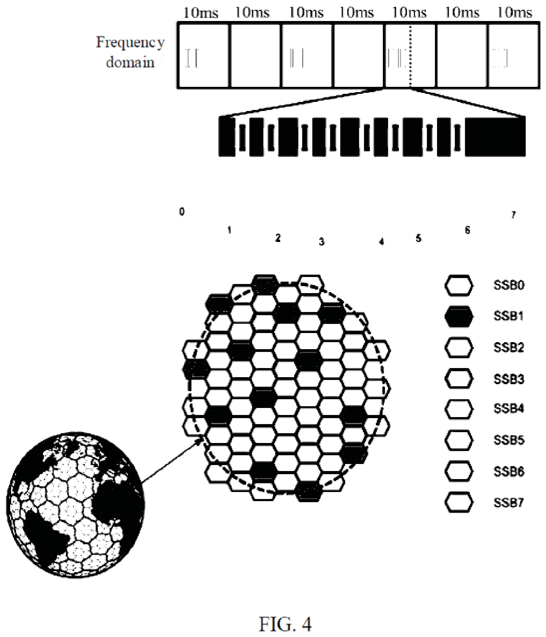

FIG. 4 is a diagram of a beam position and an allocated SSB in a satellite communication system. In the satellite communication system, a time resource may still be divided according to a specification in the NR system. To facilitate beam management, a geographic area on a surface of the earth may be divided into several grids, and locations of these grids are fixed. Each grid is referred to as a beam position, and represents a position on the ground that a beam may point to. Hundreds of beam positions may be included in coverage of one satellite. Because there are only eight SSBs, a same SSB is inevitably allocated to a plurality of beam positions. As shown in FIG. 4, a black dashed line represents coverage of one satellite, each hexagon represents a beam position, and different SSBs are allocated to beam positions corresponding to different gray scales. It can be learned that a same SSB may be allocated to a plurality of beam positions in the coverage of the satellite.

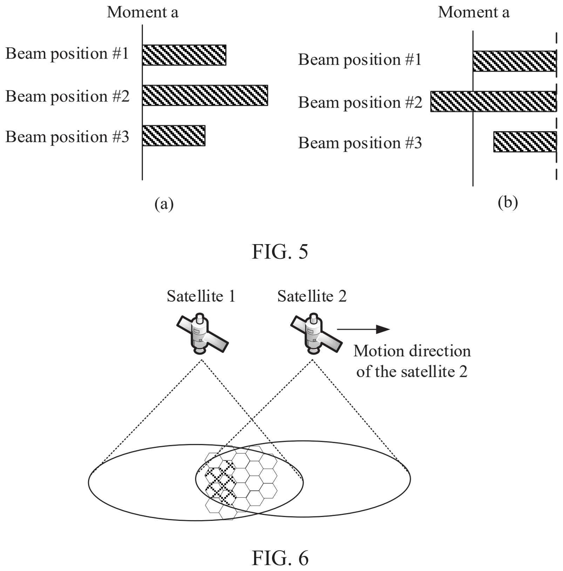

In satellite communication, because the satellite is far away from the ground, at a same moment, there is a large delay difference (or a distance difference) between a signal sent by the satellite to a satellite coverage center point and a signal sent by the satellite to a satellite coverage edge point. For example, when an SCS is 15 kHz, at a same moment, a delay difference between the signal sent by the satellite to the coverage center point and the signal sent by the satellite to the coverage edge point may reach 20 OFDM symbols. Therefore, the satellite may perform delay pre-compensation for each beam position. FIG. 5 is a diagram of sending and receiving a signal at a beam position in satellite coverage before and after delay pre-compensation. As shown in (a) in FIG. 5, before delay pre-compensation is performed by a satellite side, the satellite sends a signal to beam positions#1, #2, and #3 in coverage at a same moment a. Because distances from the satellite to center points of the beam positions#1, #2, and #3 are different, moments at which the center points of the beam positions#1, #2, and #3 receive the signal from the satellite differ greatly. This may cause complex interference, and is not conducive to interference management. As shown in (b) in FIG. 5, after delay pre-compensation is performed by the satellite side on different beam positions, the satellite may send a signal to beam positions#1, #2, and #3 at different moments. Specifically, the beam position #1 still sends the signal to the beam position #1 at the moment a, the beam position #2 sends the signal to the beam position #1 in advance before the moment a, and the beam position #3 delays sending the signal to the beam position #3 after the moment a, so that the center points of the beam positions#1, #2, and #3 can receive the signal from the satellite at the same moment.

For ease of description, it is specified in this application that when a delay pre-compensation value is a positive number, it indicates advanced sending. Correspondingly, when the delay pre-compensation value is a negative number, it indicates delayed sending. Therefore, a delay pre-compensation value of the beam position #1 is 0, a delay pre-compensation value of the beam position #2 is a positive number, and a delay pre-compensation value of the beam position #3 is a negative number.

FIG. 6 is a diagram in which a satellite 1 and a satellite 2 jointly serve a plurality of beam positions. It is assumed that the satellite 2 and the satellite 1 have performed delay pre-compensation on beam position center points in their respective coverage, and the satellite 2 and the satellite 1 have pre-stored location information of a ground beam position. When the satellite 1 and the satellite 2 jointly serve a beam position filled in a pattern in FIG. 6 (a beam position #1 is used as an example), both the satellite 1 and the satellite 2 need to send an SSB to the beam position #1. In a possible scenario in which the satellite 1 and the satellite 2 jointly serve the beam position #1, the beam position #1 is originally served by only the satellite 2, the satellite 2 sends an SSBi to the beam position #1, and a period of the SSBi is T. However, as the satellite 2 moves, switching from the satellite 2 to the satellite 1 is needed for the beam position #1, and a UE in the beam position #1 needs to receive and measure SSBs sent by the satellite 2 and the satellite 1 to the beam position #1. After satellite 2 and satellite 1 perform pre-compensation for beam position within their respective coverage, when the SSBs allocated by satellite 2 and satellite 1 to the beam position #1 arrive at the beam position #1, the following two collision cases may occur. (1) The satellite 2 and the satellite 1 send same SSBs to the beam position #1 after delay pre-compensation, and the same SSBs sent by satellite 2 and satellite 1 to the beam position #1 simultaneously arrives at the beam position #1, resulting in a collision. (2) The satellite 2 and the satellite 1 send different SSBs to the beam position #1 after delay pre-compensation, and the different SSBs sent by the satellite 2 and the satellite 1 to the beam position #1 simultaneously arrive at the beam position #1, resulting in a collision.

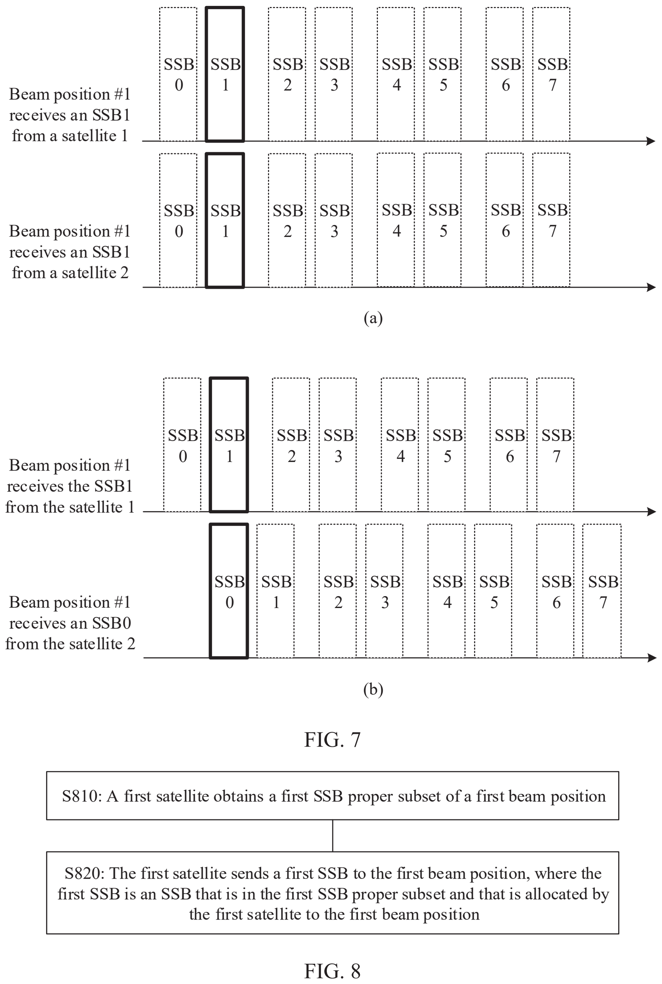

FIG. 7 is a diagram in which SSBs sent by a satellite 2 and a satellite 1 collide at a beam position #1. For example, as shown in (a) in FIG. 7, the satellite 2 sends an SSB1 to a beam position #1 after delay pre-compensation, and the satellite 1 sends an SSB1 to the beam position #1 after delay pre-compensation, and the SSB1 of the satellite 2 and the SSB1 of the satellite 1 simultaneously arrive at the beam position #1, resulting in a collision. As shown in (b) in FIG. 7, the satellite 2 sends the SSB1 to the beam position #1 after delay pre-compensation, and the satellite 1 sends an SSBO to the beam position #1 after delay pre-compensation, the SSB1 of the satellite 2 and the SSBO of the satellite 1 simultaneously arrive at the beam position #1, resulting in a collision. When SSBs sent by different satellites to the beam position #1 collide, severe interference is generated during reception of the SSB by a UE in the beam position #1, severely degrading system performance.

In view of this, this application provides a communication method, to reduce a possibility of collision between SSBs sent by different satellites to a same beam position, thereby effectively reducing SSB interference between the satellites. With reference to FIG. 8, the following describes in detail the method provided in this application.

FIG. 8 is a schematic flowchart of a communication method according to this application. This method includes the following steps.

S810: A first satellite obtains a first SSB proper subset of a first beam position. The first SSB proper subset is a proper subset of an SSB burst set of the first satellite, the first SSB proper subset is determined based on related information of the first satellite and a second satellite serving the first beam position, and the first beam position is a geographic area jointly covered by the first satellite and the second satellite.

It may be understood that the first SSB proper subset is a candidate set of SSBs allocated by the first satellite to the first beam position.

The first SSB proper subset is the proper subset of the SSB burst set of the first satellite. It may be understood that the first SSB proper subset includes some SSBs in the SSB burst set of the first satellite. For example, the SSB burst set of the first satellite includes {SSBO, SSB1, ..., SSB7}, and the first SSB proper subset may be {SSB4, SSB5, SSB6, SSB7}.

For example, that the first satellite obtains the first SSB proper subset of the first beam position may include the following two manners: The first satellite receives the first SSB proper subset from another device, or the first satellite determines the first SSB proper subset. The following provides descriptions with reference to a specific example, and details are not described herein.

When the first satellite and the second satellite need to simultaneously send an SSB to the first beam position, for example, in a scenario in which the satellite 1 and the satellite 2 shown in FIG. 6 jointly serve a plurality of beam positions, the first satellite may be considered as the satellite 1 in FIG. 6, the second satellite may be considered as the satellite 2 in FIG. 6, and the first beam position may be considered as any beam position filled in a pattern in FIG. 6. To avoid a collision between SSBs sent by the two satellites, that the first satellite obtains the first SSB proper subset of the first beam position includes: The first satellite determines the first SSB proper subset based on a second SSB, where the second SSB is an SSB allocated by the second satellite to the first beam position.

It should be understood that the second SSB is an SSB in an SSB burst set of the second satellite.

For example, no SSB in the first SSB proper subset sent by the first satellite to the first beam position causes interference to the second SSB sent by the second satellite to the first beam position. It may be understood that a first SSB is any SSB in the first SSB proper subset. In this case, when the first satellite sends the first SSB to the first beam position, no interference is caused to the second SSB sent by the second satellite to the first beam position. It may be understood that the first SSB sent by the first satellite to the first beam position and the second SSB sent by the second satellite to the first beam position do not arrive at the first beam position at a same moment.

Optionally, the SSB burst set of the first satellite may be the same as or different from the SSB burst set of the second satellite. For example, the SSB burst sets of the first satellite and the second satellite are both {SSB0, SSB1, ..., SSB7}, or the SSB burst set of the first satellite is {SSB0, SSB1, ..., SSB7}, and the SSB burst set of the second satellite is {SSB0, SSB1, ..., SSB15}.

In a possible implementation, the first satellite determines the first SSB proper subset based on a maximum propagation delay difference, a minimum propagation delay difference, and the second SSB. The maximum propagation delay difference is determined based on first propagation duration and second propagation duration, and the minimum propagation delay difference is determined based on third propagation duration and fourth propagation duration. The first propagation duration is determined based on maximum propagation duration from the first satellite to the first beam position and first delay pre-compensation duration. The second propagation duration is determined based on minimum propagation duration from the second satellite to the first beam position and second delay pre-compensation duration. The third propagation duration is determined based on minimum propagation duration from the first satellite to the first beam position and the first delay pre-compensation duration. The fourth propagation duration is determined based on maximum propagation duration from the second satellite to the first beam position and the second delay pre-compensation duration. The first delay compensation duration and the second delay compensation duration are respectively delay compensation duration allocated by the first satellite to the first beam position and delay compensation duration allocated by the second satellite to the first beam position. Delay pre-compensation duration of all beam positions within coverage of the first satellite allows devices located at center points of all the beam positions within the coverage of the first satellite to receive, at a same moment, a signal that needs to be sent at a first moment before the delay pre-compensation duration is allocated. Delay pre-compensation duration of all beam positions within coverage of the second satellite allows devices located at center points of all the beam positions within the coverage of the second satellite to receive, at a same moment, a signal that needs to be sent at a second moment before the pre-compensation duration is allocated.

Optionally, in this implementation, before the first satellite determines the first SSB proper subset, the first satellite further needs to obtain related information of the second satellite required for determining the first SSB proper subset. In this case, optionally, the method further includes: The second satellite generates first information, where the first information includes related information of the second satellite serving the first beam position, and the second satellite sends the first information to the first satellite. Correspondingly, the first satellite receives the first information from the second satellite. The following describes the first information by using an example.

For example, the first information includes the second delay pre-compensation duration, location information of the second satellite, and index information of the second SSB in the SSB burst set of the second satellite. A location of the second satellite may be used to determine the minimum propagation duration from the second satellite to the first beam position and the maximum propagation duration from the second satellite to the first beam position, to determine the maximum propagation delay and the minimum propagation delay. Therefore, the first satellite may determine the first SSB proper subset based on the maximum propagation delay difference, the minimum propagation delay difference, and the second SSB.

For example, the first information includes the second delay pre-compensation duration, the minimum propagation duration from the second satellite to the first beam position, the maximum propagation duration from the second satellite to the first beam position, and index information of the second SSB in the SSB burst set of the second satellite.

For example, the first information includes the second delay pre-compensation duration, a quantity of offset OFDM symbols corresponding to the minimum propagation duration from the second satellite to the first beam position, a quantity of offset OFDM symbols corresponding to the maximum propagation duration from the second satellite to the first beam position, and index information of the second SSB in the SSB burst set of the second satellite.

For example, the first information includes the second propagation duration, the fourth propagation duration, and the index information of the second SSB in the SSB burst set of the second satellite.

Optionally, parameters included in the first information may be respectively carried in different information. This is not specifically limited in this application.

In another possible implementation, the first satellite may alternatively send, to the second SSB, related information of the first satellite required for determining the first SSB proper subset. For example, the first satellite sends second information to the second satellite, where the first information includes the first delay pre-compensation duration and location information of the first satellite. The second satellite determines the first SSB proper subset based on the second information. Then, the second satellite may send the determined first SSB proper subset to the first satellite.

In still another possible implementation, if the first satellite operates in the transparent mode, the first SSB proper subset may be determined by a terrestrial base station corresponding to the first satellite, and then forwarded to the first satellite.

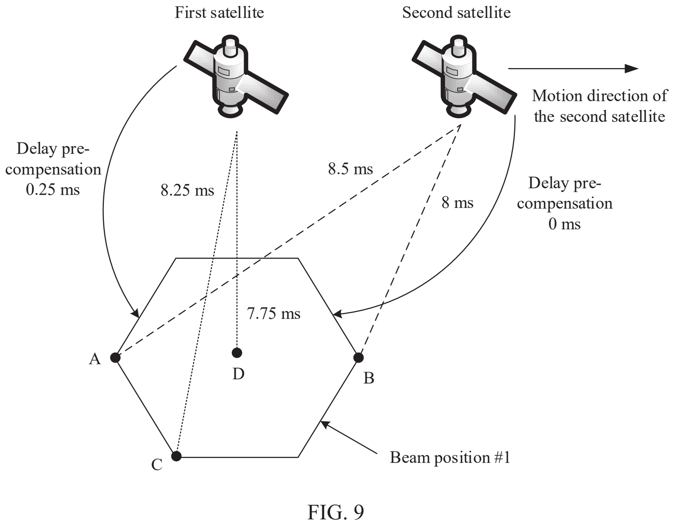

With reference to FIG. 9, the following describes the first propagation duration, the second propagation duration, the third propagation duration, and the fourth propagation duration in this implementation by using an example.

FIG. 9 is a diagram of propagation duration from a first satellite and a second satellite to a beam position #1. For example, as shown in FIG. 9, a delay pre-compensation value of the first satellite for the beam position #1 (that is, an example of the first beam position) is 0.25 ms (that is, an example of the first delay pre-compensation duration), and a delay pre-compensation value of the second satellite for the beam position #1 is 0 ms (that is, an example of the second delay pre-compensation duration). Maximum propagation duration and minimum propagation duration from the first satellite to the beam position #1 are respectively 8.25 ms and 7.75 ms (that is, propagation delays from the first satellite to points C and D in FIG. 9), and maximum propagation duration and minimum propagation duration from the second satellite to the beam position #1 are respectively 8.5 ms and 8 ms (that is, propagation delays from the second satellite to points A and B in FIG. 9).

For example, the first satellite and the second satellite have a same SSB burst set, and the burst set includes eight SSBs, which are denoted as {SSB0, SSB1, ..., SSB7}. The first satellite and the second satellite send the SSB burst set at an interval of 20 ms, and the SSB burst set needs to be sent in a first half of each frame, that is, within 5 ms. The satellite sends the SSBO to the SSB7 at different times within 5 ms. For example, an SCS is 15 kHz, 70 OFDM symbols are included in the 5 ms, where every 14 OFDM symbols form one slot (slot), a time length of each slot is 1 ms, and a start OFDM symbol occupied by the SSBO to the SSB7 is {2,8,16,22,30,36,44,50}. It should be understood that symbols whose OFDM symbols are {2,8,16,22,30,36,44,50} are predefined moments for sending the SSBO to the SSB7 in one SSB period (that is, within 20 ms).

Because the delay pre-compensation value of the second satellite is 0, if the second satellite sends the SSBO (that is, an example of the second SSB) to the beam position #1 at a moment a, a UE at the point A starts to receive the SSBO after 8.5 ms (8.5 ms-0 ms) (that is, an example of the fourth propagation duration) from the moment a, and a UE at the point B starts to receive the SSBO after 8 ms (8 ms-0 ms) (that is, an example of the second propagation duration) from the moment a. It should be understood that because the delay pre-compensation value of the first satellite is 0, the moment a is a predefined moment for sending the SSBO in a period. In this example, the moment a is a moment corresponding to an eighth OFDM symbol in a first 5 ms of an SSB period.

Because the delay pre-compensation value of the first satellite is 2.5 ms, if the first satellite needs to send an SSBi to the beam position #1 (for example, the SSBi is any SSB in the SSBO to the SSB7), the first satellite needs to send the SSBi to the beam position #1 2.5 ms in advance at a predefined moment for sending the SSBi. For example, the SSBi is an SSB0, and the moment a is a predefined moment for sending the SSBO in a period. Because the delay pre-compensation value of the first satellite is 2.5 ms, if the first satellite needs to send the SSBO to the beam position #1, the first satellite needs to send the SSBO to the beam position #1 2.5 ms in advance before the moment a. In this case, a UE at the point C starts to receive the SSBO after 8 ms (8.25 ms minus 0.25 ms) (that is, an example of first propagation duration) from the moment a, a UE at the point D starts to receive the SSBO after 7.5 ms (7.75 ms minus 0.25 ms) (that is, an example of third propagation duration) from the moment a.

Therefore, a maximum propagation delay difference between receptions, by the beam position #1, of SSBi sent by the first satellite and SSBi sent by the second satellite in a same period is 0 ms (8 ms minus 8 ms) (that is, the first propagation duration minus the second propagation duration), and a minimum propagation delay difference between receptions, by the beam position #1, of the SSBi sent by the first satellite and the SSBi sent by the second satellite in a same period is -1 ms (7.5 ms minus 8.5 ms) (that is, the third propagation duration minus the fourth propagation duration).

The following provides a specific implementation in which the first satellite determines the first SSB proper subset based on the maximum propagation delay difference, the minimum propagation delay difference, and the second SSB. The implementation specifically includes the following step (1) to step (3).

(1) The first satellite determines a third SSB based on the maximum propagation delay difference, where the third SSB is included in the SSB burst set of the first satellite. A time at which the third SSB is received at a location corresponding to the maximum propagation duration from the first satellite to the first beam position overlaps a time at which the second SSB is received at a location corresponding to the minimum propagation duration from the second satellite to the first beam position (that is, a collision occurs).

(2) The first satellite determines a fourth SSB based on the minimum propagation delay difference, where the fourth SSB is included in the SSB burst set of the first satellite. A time at which the fourth SSB is received at a location corresponding to the minimum propagation duration from the first satellite to the first beam position overlaps a time at which the second SSB is received at a location corresponding to the maximum propagation duration from the second satellite to the first beam position.

(3) The first satellite determines the first SSB proper subset, where the first SSB proper subset includes a remaining SSB in the SSB burst set of the first satellite other than the third SSB, the fourth SSB, and all SSBs between the second SSB and the fourth SSB.

Optionally, in step (1), a distance between the location corresponding to the maximum propagation duration from the first satellite to the first beam position and the location corresponding to the minimum propagation duration from the second satellite to the first beam position is long, and even if SSB receiving times overlap, almost no interference is generated. In this case, the first SSB proper subset may further include the third SSB. Similarly, optionally, the first SSB proper subset may further include the fourth SSB, and the first satellite may determine the first SSB proper subset based on an actual situation.

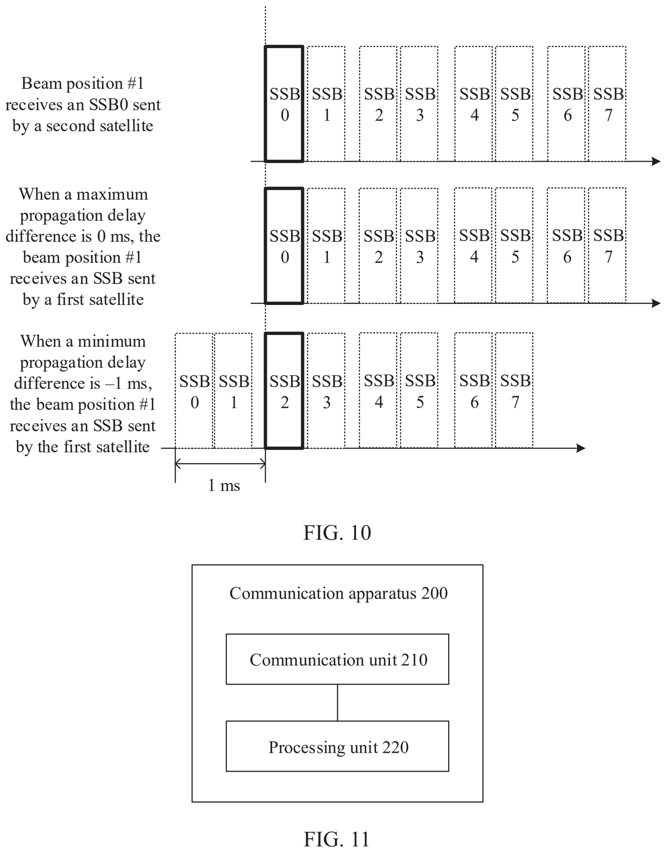

Based on the example in FIG. 9, with reference to FIG. 10, the following uses an example to describe how the first satellite determines the first SSB proper subset based on the maximum propagation delay difference, the minimum propagation delay difference, and the second SSB. In this example, that the second SSB is an SSBO is used for description.

FIG. 10 is a diagram of a collision between an SSB sent by a first satellite and an SSB sent by a second satellite that are received at a beam position #1 of a maximum propagation delay difference and a minimum propagation delay difference. For example, it is assumed that a moment at which the beam position #1 receives an SSBO sent by the second satellite in FIG. 10 is a moment at which the point B in the beam position #1 receives the SSBO sent by the second satellite. The maximum propagation delay difference (that is, a propagation delay difference between the point C and the point B) is 0 ms. Therefore, if an SSB allocated by the first satellite to the beam position #1 is an SSBO, in this case, a moment at which the UE at the point C receives the SSBO sent by the first satellite overlaps a moment at which the UE at the point B receives the SSBO sent by the second satellite. That is, an SSB collision occurs. Similarly, for example, it is assumed that a moment at which the beam position #1 receives an SSBO sent by the second satellite in FIG. 10 is a moment at which the point A in the beam position #1 receives the SSBO sent by the second satellite. A sending time difference between the SSBO and an SSB2 in any SSB period is 1 ms, and the minimum propagation delay difference (that is, a propagation delay difference between the point D and the point A) is -1 ms. Therefore, if an SSB allocated by the first satellite to the beam position #1 is the SSB2, in this case, a moment at which the UE located at the point D receives the SSB2 sent by the first satellite overlaps a moment at which the UE located at the point A receives the SSBO sent by the second satellite. In this way, when the SSB allocated by the first satellite to the beam position #1 is the SSB2, an SSB collision occurs.

It may be understood that the collision SSBs determined based on the maximum propagation delay difference and the minimum propagation delay difference are the SSBO and the SSB2 respectively. In this case, there is another delay difference between the maximum propagation delay difference and the minimum propagation delay difference, so that an SSB1 (that is, an SSB between the SSBO and the SSB2) sent by the first satellite to the beam position #1 interferes with the SSBO sent by the second satellite to the first beam position. Herein, it is assumed that in this example, the SSBO and the SSB2 sent by the first satellite to the beam position #1 cause interference to the SSBO sent by the second satellite to the beam position #1. In this case, it is determined that an SSB set that causes interference to the SSBO sent by the second satellite is {SSB0, SSB1, SSB2}. Correspondingly, an SSB set that causes no interference to the SSBO sent by the second satellite is {SSB3, SSB4, SSB5, SSB6, SSB7} (that is, an example of the first SSB proper subset).

S820: The first satellite sends the first SSB to the first beam position, where the first SSB is an SSB that is in the first SSB proper subset and that is allocated by the first satellite to the first beam position.

It should be understood that, in embodiments of this application, a satellite is used as an example to describe the solutions in detail. However, embodiments of this application is not limited thereto. For example, the satellite in this application may be alternatively replaced with a gateway station in NTN communication, a high-altitude platform, another device that undertakes a base station function in D2D communication, or the like. This is not limited in this application.

It should be understood that sequence numbers of the foregoing processes do not mean execution sequences. The execution sequences of the processes should be determined according to functions and internal logic of the processes, and should not be construed as any limitation on the implementation processes of embodiments of this application.

It should be further understood that, in embodiments of this application, unless otherwise stated or there is a logic conflict, terms and/or descriptions in different embodiments are consistent and may be mutually referenced, and technical features in different embodiments may be combined based on an internal logic relationship thereof, to form a new embodiment.

It should be further understood that in some of the foregoing embodiments, a device in an existing network architecture is mainly used as an example for description. It should be understood that a specific form of the device is not limited in embodiments of this application. For example, all devices that can implement a same function in the future are applicable to embodiments of this application.

It may be understood that, in the foregoing method embodiments, methods and operations implemented by a device (for example, the first satellite or the second satellite) may also be implemented by a component (for example, a chip or a circuit) of the device.

The foregoing describes in detail the methods provided in embodiments of this application with reference to FIG. 1 to FIG. 10. The methods are mainly described from a perspective of interaction between the first satellite and the second satellite. It may be understood that to implement the foregoing functions, the first satellite and the second satellite include corresponding hardware structures and/or software modules for performing the functions.

A person skilled in the art may be aware that, in combination with the examples described in embodiments disclosed in this specification, units and algorithm steps may be implemented in a form of hardware or a combination of hardware and computer software in this application. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

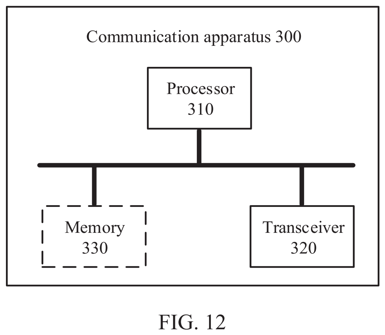

The following describes in detail communication apparatuses provided in embodiments of this application with reference to FIG. 11 and FIG. 12. It should be understood that descriptions of apparatus embodiments correspond to the descriptions of the method embodiments. Therefore, for content that is not described in detail, refer to the foregoing method embodiments. For brevity, some content is not described herein again. In embodiments of this application, the first satellite or the second satellite may be divided into functional modules based on the foregoing method examples. For example, functional modules may be obtained through division based on corresponding functions, or two or more functions may be integrated into one processing module. The integrated module may be implemented in a form of hardware, or may be implemented in a form of a software functional module. It should be noted that module division in embodiments of this application is an example, and is merely logical function division. In actual implementation, there may be another division manner. An example in which each functional module is obtained through division based on each corresponding function is used below for description.

The foregoing describes in detail the methods provided in this application. The following describes a communication apparatus provided in this application. In a possible implementation, the apparatus is configured to implement steps or procedures corresponding to the first satellite in the foregoing method embodiments. In another possible implementation, the apparatus is configured to implement steps or procedures corresponding to the second satellite in the foregoing method embodiments.

FIG. 11 is a block diagram of a communication apparatus 200 according to an embodiment of this application. As shown in FIG. 11, the apparatus 200 may include a communication unit 210 and a processing unit 220. The communication unit 210 may communicate with the outside, and the processing unit 220 is configured to process data. The communication unit 210 may also be referred to as a communication interface or a transceiver unit.

In a possible design, the apparatus 200 may implement steps or procedures performed by the first satellite in the foregoing method embodiments. The processing unit 220 is configured to perform processing-related operations of the first satellite in the foregoing method embodiments, and the communication unit 210 is configured to perform sending-related operations of the first satellite in the foregoing method embodiments.

In another possible design, the apparatus 200 may implement steps or procedures performed by the second satellite in the foregoing method embodiments. The communication unit 210 is configured to perform receiving-related operations of the second satellite in the foregoing method embodiments, and the processing unit 220 is configured to perform processing-related operations of the second satellite in the foregoing method embodiments.

It should be understood that the apparatus 200 herein is embodied in a form of a functional unit. The term "unit" herein may indicate an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function. In an optional example, a person skilled in the art may understand that the apparatus 200 may be specifically the first satellite in the foregoing embodiments, and may be configured to perform the procedures and/or the steps corresponding to the first satellite in the foregoing method embodiments; or the apparatus 200 may be specifically the second satellite in the foregoing embodiments, and may be configured to perform the procedures and/or the steps corresponding to the second satellite in the foregoing method embodiments. To avoid repetition, details are not described herein again.

The apparatus 200 in the foregoing solutions has a function of implementing corresponding steps performed by the first satellite in the foregoing methods, or the apparatus 200 in the foregoing solutions has a function of implementing corresponding steps performed by the second satellite in the foregoing methods. The function may be implemented by hardware, or may be implemented by hardware executing corresponding software. The hardware or software includes one or more modules corresponding to the foregoing function. For example, the communication unit may be replaced with a transceiver (for example, a sending unit of the communication unit may be replaced with a transmitter, and a receiving unit of the communication unit may be replaced with a receiver), and another unit such as the processing unit may be replaced with a processor, to separately perform the sending/receiving operations and the processing-related operations in the method embodiments.

In addition, the communication unit may alternatively be a transceiver circuit (for example, which may include a receiving circuit and a sending circuit), and the processing unit may be a processing circuit. In this embodiment of this application, the apparatus in FIG. 11 may be the first satellite or the second satellite in the foregoing embodiments, or may be a chip or a chip system, for example, a system on chip (system on chip, SoC). The communication unit may be an input/output circuit or a communication interface. The processing unit is a processor, a microprocessor, or an integrated circuit integrated on the chip. This is not limited herein.

FIG. 12 is a block diagram of a communication apparatus 300 according to an embodiment of this application. The apparatus 300 includes a processor 310 and a transceiver 320. The processor 310 and the transceiver 320 communicate with each other through an internal connection path, and the processor 310 is configured to execute instructions, to control the transceiver 320 to send a signal and/or receive a signal.

Optionally, the apparatus 300 may further include a memory 330. The memory 330 communicates with the processor 310 and the transceiver 320 through the internal connection path. The memory 330 is configured to store instructions, and the processor 310 may execute the instructions stored in the memory 330. In a possible implementation, the apparatus 300 is configured to implement procedures and steps corresponding to the first satellite in the foregoing method embodiments. In another possible implementation, the apparatus 300 is configured to implement procedures and steps corresponding to the second satellite in the foregoing method embodiments.

It should be understood that the apparatus 300 may be specifically the first satellite or the second satellite in the foregoing embodiments, or may be a chip or a chip system. Correspondingly, the transceiver 320 may be a transceiver circuit of the chip. This is not limited herein. Specifically, the apparatus 300 may be configured to perform steps and/or procedures corresponding to the first satellite or the second satellite in the foregoing method embodiments. Optionally, the memory 330 may include a read-only memory and a random access memory, and provide instructions and data for the processor. A part of the memory may further include a nonvolatile random access memory. For example, the memory may further store information of a device type. The processor 310 may be configured to execute the instructions stored in the memory, and when the processor 310 executes the instructions stored in the memory, the processor 310 is configured to perform the steps and/or procedures corresponding to the first satellite or the second satellite in the method embodiments.

In an implementation process, steps in the foregoing methods can be implemented by using a hardware integrated logic circuit in the processor, or by using instructions in a form of software. The steps of the methods disclosed with reference to embodiments of this application may be directly performed and completed by a hardware processor, or may be performed and completed by using a combination of hardware in the processor and a software module. The software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor. To avoid repetition, details are not described herein again.

It should be noted that, the processor in this embodiment of this application may be an integrated circuit chip, and has a signal processing capability. In an implementation process, steps in the foregoing method embodiments can be implemented by using a hardware integrated logic circuit in the processor, or by using instructions in a form of software. The processor may be a general-purpose processor, a digital signal processor (digital signal processor, DSP), an ASIC, a field-programmable gate array (field-programmable gate array, FPGA) or another programmable logic device, a discrete gate or a transistor logic device, or a discrete hardware component. The processor in this embodiment of this application may implement or perform the methods, the steps, and the logical block diagrams that are disclosed in embodiments of this application. The general-purpose processor may be a microprocessor, or the processor may be any conventional processor or the like. The steps of the methods disclosed with reference to embodiments of this application may be directly performed and completed by a hardware decoding processor, or may be performed and completed by using a combination of hardware in the decoding processor and a software module. The software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor.

It may be understood that the memory in this embodiment of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through an example rather than a limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memory of the systems and methods described in this specification includes but is not limited to these memories and any memory of another appropriate type.

It should be noted that when the processor is a general-purpose processor, a DSP, an ASIC, an FPGA or another programmable logic device, a discrete gate or a transistor logic device, or a discrete hardware component, the memory (storage module) may be integrated into the processor.

In addition, this application further provides a computer-readable storage medium. The computer-readable storage medium stores computer instructions, and when the computer instructions are run on a computer, operations and/or procedures performed by the first satellite or the second satellite in the method embodiments of this application are performed.

This application further provides a computer program product. The computer program product includes computer program code or instructions, and when the computer program code or the instructions are run on a computer, operations and/or procedures performed by the first satellite or the second satellite in the method embodiments of this application are performed.

In addition, this application further provides a chip. The chip includes a processor. A memory configured to store a computer program is disposed independent of the chip. The processor is configured to execute the computer program stored in the memory, to perform an operation and/or processing performed by the first satellite or the second satellite in any method embodiment.

Further, the chip may include a communication interface. The communication interface may be an input/output interface, an interface circuit, or the like. Further, the chip may include the memory.

In addition, this application further provides a communication system. The communication system includes the first satellite and the second satellite in embodiments of this application.

It should be further noted that the memory described in this specification is intended to include, but not limited to, these memories and any memory of another appropriate type.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application. It may be clearly understood by a person skilled in the art that, for the purpose of convenient and brief description, for a detailed working process of the foregoing system, apparatus, and unit, reference may be made to a corresponding process in the foregoing method embodiments. Details are not described herein again. In the several embodiments provided in this application, it should be understood that the disclosed system, apparatus, and method may be implemented in other manners. For example, the described apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms. The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments. In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, the part contributing to the conventional technology, or some of the technical solutions may be implemented in a form of a software product. The computer software product is stored in a storage medium, and includes several instructions for enabling a computer device (which may be a personal computer, a server, a network device, or the like) to perform all or some of the steps of the methods described in embodiments of this application. The foregoing storage medium includes any medium that can store program code, such as a USB flash drive, a removable hard disk, a ROM, a RAM, a magnetic disk, or an optical disc.

It should be understood that, an "embodiment" mentioned throughout this specification means that particular features, structures, or characteristics related to this embodiment are included in at least one embodiment of this application. Therefore, embodiments in the entire specification do not necessarily refer to a same embodiment. In addition, these particular features, structures, or characteristics may be combined in one or more embodiments by using any appropriate manner.

It should be further understood that ordinal numbers such as "first" and "second" in embodiments of this application are used to distinguish between a plurality of objects, but are not intended to limit sizes, content, a sequence, a time sequence, priorities, importance of the plurality of objects, or the like.

It should be further understood that, in this application, both "when" and "if" mean that a network element performs corresponding processing in an objective situation, but do not constitute a limitation on time, do not require that the network element certainly has a determining action during implementation, and do not mean another limitation either.

It should be further understood that, in this application, "at least one" means one or more, and "a plurality of" means two or more. "At least one item (piece) of the following" or a similar expression thereof means one item (piece) or more items (pieces), that is, any combination of these items, including any combination of singular items (pieces) or plural items (pieces). For example, at least one item (piece) of a, b, or c may represent a, b, c, a and b, a and c, b and c, or a, b, and c.

It should be further understood that, unless otherwise specified, a meaning similar to "an item includes one or more of the following: A, B, and C" in this application usually means that the item may be any one of the following: A; B; C; A and B; A and C; B and C; A, B and C; A and A; A, A and A; A, A and B; A, A and C; A, B and B; A, C and C; B and B; B, B and B; B, B and C; C and C; C, C and C, and other combinations of A, B, and C. The foregoing uses three elements A, B, and C as an example to describe an optional case of the item. When an expression is "an item includes at least one of the following: A, B, ..., and X", in other words, more elements are included in the expression, a case to which the item is applicable may also be obtained according to the foregoing rule.

It should be further understood that the term "and/or" in this specification describes only an association relationship between associated objects, and indicates that three relationships may exist. For example, A and/or B may indicate the following cases: A exists alone, both A and B are included, and B exists alone, where A and B may be singular or plural. The character "/" generally indicates an "or" relationship between the associated objects. For example, A/B indicates A or B.

It should be further understood that in embodiments of this application, "B corresponding to A" indicates that B is associated with A, and B may be determined based on A. However, it should be further understood that determining B based on A does not mean that B is determined only based on A. B may alternatively be determined based on A and/or other information.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
obtaining, by a first satellite, a first synchronization signal block SSB proper subset of a first beam position, wherein the first SSB proper subset is a proper subset of an SSB burst set of the first satellite, the first SSB proper subset is determined based on related information of the first satellite and a second satellite serving the first beam position, and the first beam position is a geographic area jointly covered by the first satellite and the second satellite; and
sending, by the first satellite, a first SSB to the first beam position, wherein the first SSB is an SSB that is in the first SSB proper subset and that is allocated by the first satellite to the first beam position.

2. The method according to claim 1, wherein obtaining, by the first satellite, the first SSB proper subset of the first beam position comprises:
determining, by the first satellite, the first SSB proper subset based on a second SSB, wherein the second SSB is an SSB allocated by the second satellite to the first beam position.

3. The method according to claim 2, wherein determining, by the first satellite, the first SSB proper subset based on the second SSB comprises:
determining, by the first satellite, the first SSB proper subset based on a maximum propagation delay difference, a minimum propagation delay difference, and the second SSB, wherein the maximum propagation delay difference is determined based on first propagation duration and second propagation duration, the minimum propagation delay difference is determined based on third propagation duration and fourth propagation duration, the first propagation duration is determined based on maximum propagation duration from the first satellite to the first beam position and first delay pre-compensation duration, the second propagation duration is determined based on minimum propagation duration from the second satellite to the first beam position and second delay pre-compensation duration, the third propagation duration is determined based on minimum propagation duration from the first satellite to the first beam position and the first delay pre-compensation duration, and the fourth propagation duration is determined based on maximum propagation duration from the second satellite to the first beam position and the second delay pre-compensation duration, the first delay compensation duration and the second delay compensation duration are respectively delay compensation duration allocated by the first satellite to the first beam position and delay compensation duration allocated by the second satellite to the first beam position, delay pre-compensation duration of all beam positions within coverage of the first satellite allows devices located at center points of all the beam positions within the coverage of the first satellite to receive, at a same moment, a signal that needs to be sent at a first moment before the delay pre-compensation duration is allocated, and delay pre-compensation duration of all beam positions within coverage of the second satellite allows devices located at center points of all the beam positions within the coverage of the second satellite to receive, at a same moment, a signal that needs to be sent at a second moment before the delay pre-compensation duration is allocated.

4. The method according to claim 3, wherein determining, by the first satellite, the first SSB proper subset based on the maximum propagation delay difference, the minimum propagation delay difference, and the second SSB comprises:
determining, by the first satellite, a third SSB based on the maximum propagation delay difference, wherein the third SSB is comprised in the SSB burst set of the first satellite;
determining, by the first satellite, a fourth SSB based on the minimum propagation delay difference, wherein the fourth SSB is comprised in the SSB burst set of the first satellite; and
determining, by the first satellite, the first SSB proper subset, wherein the first SSB proper subset comprises a remaining SSB in the SSB burst set of the first satellite other than the third SSB, the fourth SSB, and all SSBs between the third SSB and the fourth SSB.

5. The method according to claim 3 or 4, wherein the method further comprises:
receiving, by the first satellite, first information from the second satellite, wherein the first information comprises related information of the second satellite serving the first beam position.

6. The method according to claim 5, wherein the first information comprises the second delay pre-compensation duration, location information of the second satellite, and index information of the second SSB in an SSB burst set of the second satellite.

7. The method according to claim 5, wherein the first information comprises the second delay pre-compensation duration, the minimum propagation duration from the second satellite to the first beam position, the maximum propagation duration from the second satellite to the first beam position, and index information of the second SSB in an SSB burst set of the second satellite.

8. The method according to claim 5, wherein the first information comprises the second delay pre-compensation duration, a quantity of offset orthogonal frequency division multiplexing OFDM symbols corresponding to the minimum propagation duration from the second satellite to the first beam position, a quantity of offset OFDM symbols corresponding to the maximum propagation duration from the second satellite to the first beam position, and index information of the second SSB in an SSB burst set of the second satellite.

9. A communication method, comprising:
generating, by a second satellite, first information, wherein the first information comprises related information of the second satellite serving a first beam position, the first information is used to determine a first synchronization signal block SSB proper subset, the first SSB proper subset is a candidate set of SSBs allocated by a first satellite to the first beam position, the first SSB proper subset is a proper subset of an SSB burst set of the first satellite, and the first beam position is a geographic area jointly covered by the first satellite and the second satellite; and
sending, by the second satellite, the first information to the first satellite.

10. The method according to claim 9, wherein the first SSB proper subset is determined based on a maximum propagation delay difference, a minimum propagation delay difference, and a second SSB, the second SSB is an SSB allocated by the second satellite to the first beam position, and the first information is used to determine the maximum propagation delay difference, the minimum propagation delay difference, and the second SSB; and
the maximum propagation delay difference is determined based on first propagation duration and second propagation duration, the minimum propagation delay difference is determined based on third propagation duration and fourth propagation duration, the first propagation duration is determined based on maximum propagation duration from the first satellite to the first beam position and first delay pre-compensation duration, the second propagation duration is determined based on minimum propagation duration from the second satellite to the first beam position and second delay pre-compensation duration, the third propagation duration is determined based on minimum propagation duration from the first satellite to the first beam position and the first delay pre-compensation duration, and the fourth propagation duration is determined based on maximum propagation duration from the second satellite to the first beam position and the second delay pre-compensation duration, the first delay compensation duration and the second delay compensation duration are respectively delay compensation duration allocated by the first satellite to the first beam position and delay compensation duration allocated by the second satellite to the first beam position, delay pre-compensation duration of all beam positions within coverage of the first satellite allows devices located at center points of all the beam positions within the coverage of the first satellite to receive, at a same moment, a signal that needs to be sent at a first moment before the delay pre-compensation duration is allocated, and delay pre-compensation duration of all beam positions within coverage of the second satellite allows devices located at center points of all the beam positions within the coverage of the second satellite to receive, at a same moment, a signal that needs to be sent at a second moment before the delay pre-compensation duration is allocated.

11. The method according to claim 10, wherein the first information comprises the second delay pre-compensation duration, location information of the second satellite, and index information of the second SSB in an SSB burst set of the second satellite.

12. The method according to claim 10, wherein the first information comprises the second delay pre-compensation duration, the minimum propagation duration from the second satellite to the first beam position, the maximum propagation duration from the second satellite to the first beam position, and index information of the second SSB in an SSB burst set of the second satellite.

13. The method according to claim 10, wherein the first information comprises the second delay pre-compensation duration, a quantity of offset orthogonal frequency division multiplexing OFDM symbols corresponding to the minimum propagation duration from the second satellite to the first beam position, a quantity of offset OFDM symbols corresponding to the maximum propagation duration from the second satellite to the first beam position, and index information of the second SSB in an SSB burst set of the second satellite.

14. A communication apparatus, comprising:
a processing unit, configured to obtain a first synchronization signal block SSB proper subset of a first beam position, wherein the first SSB proper subset is a proper subset of an SSB burst set of the first satellite, the first SSB proper subset is determined based on related information of the first satellite and a second satellite serving the first beam position, and the first beam position is a geographic area jointly covered by the first satellite and the second satellite; and
a communication unit, configured to send a first SSB to the first beam position, wherein the first SSB is an SSB that is in the first SSB proper subset and that is allocated by the first satellite to the first beam position.

15. The apparatus according to claim 14, wherein the processing unit is specifically configured to determine the first SSB proper subset based on a second SSB, wherein the second SSB is an SSB allocated by the second satellite to the first beam position.

16. The apparatus according to claim 15, wherein the processing unit is specifically configured to determine the first SSB proper subset based on a maximum propagation delay difference, a minimum propagation delay difference, and the second SSB, wherein the maximum propagation delay difference is determined based on first propagation duration and second propagation duration, the minimum propagation delay difference is determined based on third propagation duration and fourth propagation duration, the first propagation duration is determined based on maximum propagation duration from the first satellite to the first beam position and first delay pre-compensation duration, the second propagation duration is determined based on minimum propagation duration from the second satellite to the first beam position and second delay pre-compensation duration, the third propagation duration is determined based on minimum propagation duration from the first satellite to the first beam position and the first delay pre-compensation duration, and the fourth propagation duration is determined based on maximum propagation duration from the second satellite to the first beam position and the second delay pre-compensation duration, the first delay compensation duration and the second delay compensation duration are respectively delay compensation duration allocated by the first satellite to the first beam position and delay compensation duration allocated by the second satellite to the first beam position, delay pre-compensation duration of all beam positions within coverage of the first satellite allows devices located at center points of all the beam positions within the coverage of the first satellite to receive, at a same moment, a signal that needs to be sent at a first moment before the delay pre-compensation duration is allocated, and delay pre-compensation duration of all beam positions within coverage of the second satellite allows devices located at center points of all the beam positions within the coverage of the second satellite to receive, at a same moment, a signal that needs to be sent at a second moment before the delay pre-compensation duration is allocated.

17. The apparatus according to claim 16, wherein
the processing unit is specifically configured to determine a third SSB based on the maximum propagation delay difference, wherein the third SSB is comprised in the SSB burst set of the first satellite;
the processing unit is specifically configured to determine a fourth SSB based on the minimum propagation delay difference, wherein the fourth SSB is comprised in the SSB burst set of the first satellite; and
the processing unit is specifically configured to determine the first SSB proper subset, wherein the first SSB proper subset comprises a remaining SSB in the SSB burst set of the first satellite other than the third SSB, the fourth SSB, and all SSBs between the third SSB and the fourth SSB.

18. The apparatus according to claim 16 or 17, wherein the communication unit is further configured to receive first information from the second satellite, wherein the first information comprises related information of the second satellite serving the first beam position.

19. The apparatus according to claim 18, wherein the first information comprises the second delay pre-compensation duration, location information of the second satellite, and index information of the second SSB in an SSB burst set of the second satellite.

20. The apparatus according to claim 18, wherein the first information comprises the second delay pre-compensation duration, the minimum propagation duration from the second satellite to the first beam position, the maximum propagation duration from the second satellite to the first beam position, and index information of the second SSB in an SSB burst set of the second satellite.

21. The apparatus according to claim 18, wherein the first information comprises the second delay pre-compensation duration, a quantity of offset orthogonal frequency division multiplexing OFDM symbols corresponding to the minimum propagation duration from the second satellite to the first beam position, a quantity of offset OFDM symbols corresponding to the maximum propagation duration from the second satellite to the first beam position, and index information of the second SSB in an SSB burst set of the second satellite.

22. A communication apparatus, comprising:
a processing unit, configured to generate first information, wherein the first information comprises related information of a second satellite serving a first beam position, the first information is used to determine a first synchronization signal block SSB proper subset, the first SSB proper subset is a candidate set of SSBs allocated by a first satellite to the first beam position, the first SSB proper subset is a proper subset of an SSB burst set of the first satellite, and the first beam position is a geographic area jointly covered by the first satellite and the second satellite; and
a communication unit, configured to send the first information to the first satellite.

23. The apparatus according to claim 22, wherein the first SSB proper subset is determined based on a maximum propagation delay difference, a minimum propagation delay difference, and a second SSB, the second SSB is an SSB allocated by the second satellite to the first beam position, the first information is used to determine the maximum propagation delay difference, the minimum propagation delay difference, and the second SSB, the maximum propagation delay difference is determined based on first propagation duration and second propagation duration, the minimum propagation delay difference is determined based on third propagation duration and fourth propagation duration, the first propagation duration is determined based on maximum propagation duration from the first satellite to the first beam position and first delay pre-compensation duration, the second propagation duration is determined based on minimum propagation duration from the second satellite to the first beam position and second delay pre-compensation duration, the third propagation duration is determined based on minimum propagation duration from the first satellite to the first beam position and the first delay pre-compensation duration, and the fourth propagation duration is determined based on maximum propagation duration from the second satellite to the first beam position and the second delay pre-compensation duration, the first delay compensation duration and the second delay compensation duration are respectively delay compensation duration allocated by the first satellite to the first beam position and delay compensation duration allocated by the second satellite to the first beam position, delay pre-compensation duration of all beam positions within coverage of the first satellite allows devices located at center points of all the beam positions within the coverage of the first satellite to receive, at a same moment, a signal that needs to be sent at a first moment before the delay pre-compensation duration is allocated, and delay pre-compensation duration of all beam positions within coverage of the second satellite allows devices located at center points of all the beam positions within the coverage of the second satellite to receive, at a same moment, a signal that needs to be sent at a second moment before the delay pre-compensation duration is allocated.

24. The apparatus according to claim 23, wherein the first information comprises the second delay pre-compensation duration, location information of the second satellite, and index information of the second SSB in an SSB burst set of the second satellite.

25. The apparatus according to claim 23, wherein the first information comprises the second delay pre-compensation duration, the minimum propagation duration from the second satellite to the first beam position, the maximum propagation duration from the second satellite to the first beam position, and index information of the second SSB in an SSB burst set of the second satellite.

26. The apparatus according to claim 23, wherein the first information comprises the second delay pre-compensation duration, a quantity of offset orthogonal frequency division multiplexing OFDM symbols corresponding to the minimum propagation duration from the second satellite to the first beam position, a quantity of offset OFDM symbols corresponding to the maximum propagation duration from the second satellite to the first beam position, and index information of the second SSB in an SSB burst set of the second satellite.

27. A communication apparatus, comprising at least one processor and a communication interface, wherein the communication interface is configured to input and/or output a signal, and the at least one processor is configured to execute a computer program stored in a memory, so that the communication apparatus implements the method according to any one of claims 1 to 8, or implements the method according to any one of claims 9 to 13.

28. A processing apparatus, comprising a processor, wherein the processor is configured to execute a computer program stored in a memory, so that the apparatus implements the method according to any one of claims 1 to 8, or implements the method according to any one of claims 9 to 13.

29. A processing apparatus, comprising:
a memory, configured to store a computer program; and
a processor, configured to invoke the computer program from the memory and run the computer program, so that the apparatus implements the method according to any one of claims 1 to 8, or implements the method according to any one of claims 9 to 13.

30. A computer-readable medium, comprising a computer program, wherein when the computer program is run on a computer, the computer is enabled to perform the method according to any one of claims 1 to 8, or perform the method according to any one of claims 9 to 13.

31. A computer program product, wherein the computer program product comprises a computer program, and when the computer program is run a computer, the computer is enabled to perform the method according to any one of claims 1 to 8, or perform the method according to any one of claims 9 to 13.
